# EUROPEAN PATENT APPLICATION

(11) **EP 4 628 248 A1**
(43) Date of publication of application: **08.10.2025**
(21) Application number: 23896036.3
(22) Date of filing: 06.07.2023
(51) Int. Cl.: B23Q 1/01

(54) **VERTICAL MACHINING CENTER**

(30) Priority: 29.11.2022 CN 202211516497
(71) Applicant: Kede Numerical Control Co., Ltd., Dalian, Liaoning 116000 (CN)
(72) Inventor: GONG, Xinglin, Dalian, Liaoning 116000 (CN); REN, Zhihui, Dalian, Liaoning 116000 (CN); JING, Chuansi, Dalian, Liaoning 116000 (CN); BAO, Wenlu, Dalian, Liaoning 116000 (CN); DENG, Xin, Dalian, Liaoning 116000 (CN)
(74) Representative: JD&P Patent Attorneys Joanna Dargiewicz & Partners
(86) International application number: PCT/CN2023/105994
(87) International publication number: WO 2024/113873

(57) **Abstract**

The present invention discloses a vertical machining center including a bed body, a column, a sliding saddle, a ram, a worktable, and a support, all of which are cast using a mineral cementitious material, wherein a worktable driving device is provided on the bed body to drive the worktable to move in a Y-axis direction on the bed body, the column adopts a symmetrical gantry structure and includes a left gantry column, a right gantry column, and a gantry crossbeam, a sliding saddle driving device is provided on the gantry crossbeam to drive the sliding saddle to move in an X-axis direction, a ram driving device is provided on the sliding saddle, and the ram is internally provided with a tool spindle and a spindle motor configured to drive the tool spindle to operate. The vertical machining center according to the present invention reduces the influence of heat sources on the machine tool temperature, reduces the vibrations of various components of the machine tool, and reduces the thermal deformation of machine tool components during operation. As a result, the machine tool can maintain stable geometric accuracy, motion accuracy, positioning accuracy, and repeat positioning accuracy during long-term operation.

## Description

### Technical Field

The present invention relates to the technical field of vertical machining centers, particularly to a vertical machining center.

### Background Art

A vertical machining center refers to a machining center in which a spindle axis is set perpendicular to a worktable. It is primarily suitable for machining complex parts of plate-type, disk-type, mold, and small shell-type. A vertical machining center can perform operations such as boring, milling, drilling, tapping, and thread cutting. After a workpiece is clamped once on the machining center, a numerical control system can control the machine tool to, according to different processes, automatically select and change tools, automatically adjust the spindle rotation speed of the machine tool, the feed rate, and the motion trajectory of the tool relative to the workpiece, as well as other auxiliary functions, to perform sequential multi-process machining on multiple surfaces of the workpiece. Additionally, it features various tool-changing and tool-selection functions, ensuring high production efficiency. Due to its advantages such as high strength and excellent wear resistance, gray cast iron is commonly used in manufacturing load-bearing castings of existing CNC machine tools, such as bed body, guide rail, sliding saddle, ram, and column.

Gray cast iron HT150 has a density of 7 g/cm³, a thermal expansion coefficient of 11.1 × 10⁻⁸/°C, and a thermal conductivity of 45 w/(m.K). When the machine tool temperature is high and exceeds the specified temperature of the components cast from gray cast iron, the components cast from gray cast iron (such as bed body, column, sliding saddle, ram, and guide rail) of the machine tool are affected by both internal and external heat of the machine tool, leading to the following issues in two aspects. On one hand, major machine tool components such as bed body, column, sliding saddle, ram, and guide rail may undergo deformation, thereby compromising the machining precision of the machine tool and affecting the machining quality of the workpiece. On the other hand, the fitting clearance between different relative moving components may change, impacting the motion accuracy of the machine tool and potentially interfering with the normal operation of the machine tool.

The heat sources affecting the machine tool are numerous. The internal heat primarily comes from the heat generated by the machine tool itself, such as the heat produced by the motor during prolonged operation. The heat is, on one hand, transferred to the machine tool through motor installation components, such as the motor base, and on the other hand, the heat also affects components surrounding the motor, such as the bed body, sliding saddle, or ram, through thermal radiation. During the transmission and movement of coordinate axes, frictional heat is generated, which directly affects the kinematic pairs. Components such as guide rail, lead screw, nut, and nut seat are both sources of frictional heat and recipients of the impact of frictional heat. Additionally, external heat primarily comes from heat transfer or thermal radiation from the surroundings to the machine tool, such as the cutting heat generated during workpiece machining. During the cutting process, heat is constantly generated at the cutting edge point. The heat constantly radiates from the cutting edge point to the machining area. The motion trajectory of the cutting edge point within the machining area is uncertain, and the temperature variation influenced by the cutting edge point heat source is uncertain. Due to the continuous changes in the position of the cutting edge point and the heat radiated from the cutting edge point, the temperature distribution within the machining area becomes uneven, the direction of thermal radiation is irregular, and heat diffusion is non-uniform, resulting in the formation of an uneven temperature field on the machine tool components located within the machining area.

Although the cutting fluid carries away most of the cutting heat, some of the heat carried by the cutting fluid is still transferred to other components of the machine tool. The presence of an uneven temperature field causes the direction of thermal radiation to be irregular and heat diffusion to be non-uniform. As a result, other components of the machine tool are heated differently, leading to varying degrees of thermal deformation of other components of the machine tool. For instance, the temperature of the upper surface of the bed body is higher than the temperature of the lower surface of the bed body, creating a temperature difference. This causes the bed body to bend and deform, with the upper surface becoming convex, which affects the linearity of the guide rail installed on the bed body. Additionally, the column may experience corresponding positional changes due to the thermal deformation of the bed body, thereby damaging the original geometric accuracy of the machine tool and causing machining errors. In addition to cutting heat, the ambient temperature of the operating environment of the machine tool may also have a certain impact on the geometric accuracy of the machine tool.

During operation, the machine tool is constantly affected by both internal and external heat sources. The thermal radiation generated by both internal and external heat sources is nonlinear and irregular. As a result, the machine tool is constantly exposed to unstable and uncertain thermal influences. The major components of the machine tool, such as bed body, column, sliding saddle, ram, and worktable, as well as the transmission components of the machine tool, such as guide rail, lead screw, nut, and nut seat, are susceptible to temperature changes under the influence of heat, leading to deformation. Therefore, existing machine tools struggle to maintain stable geometric accuracy during long-term operation. The geometric accuracy of a machine tool is a comprehensive reflection of the holistic geometric shape and positional errors of the critical components and parts of the machine tool and their assembly. The geometric accuracy of the machine tool includes both the intrinsic accuracy of individual components and the relative positional accuracy between components.

Thus, there is an urgent need to propose a vertical machining center to address the issue wherein existing machine tools are affected by unstable and uncertain heat sources, causing varying degrees of deformation in components, thereby making it difficult for the machine tool to maintain stable geometric accuracy during long-term operation.

### Summary of Invention

The present invention discloses a vertical machining center to address the issue wherein existing machine tools are affected by unstable and uncertain heat sources, causing varying degrees of deformation in components, thereby making it difficult for the machine tool to maintain stable geometric accuracy during long-term operation.

To achieve the above objective, the technical solution of the present invention is as follows.

A vertical machining center including: a bed body, a column, a sliding saddle, a ram, a worktable, and a support, wherein the bed body, the column, the sliding saddle, the ram, the worktable, and the support are all cast using a mineral cementitious material,
a worktable driving device is provided on the bed body to drive the worktable to move in a Y-axis direction on the bed body,
the column is fixed on the bed body and adopts a symmetrical gantry structure, including a left gantry column, a right gantry column, and a gantry crossbeam, and a sliding saddle driving device is provided on the gantry crossbeam to drive the sliding saddle to move in an X-axis direction,
a ram driving device is provided on the sliding saddle to drive the ram to slide in a Z-axis direction, and
the ram is internally provided with a tool spindle and a spindle motor configured to drive the tool spindle to operate.

Preferably, the mineral cementitious material is selected from cast stone or foamed cement.

By adopting the above technical solution, compared with traditional gray cast iron, the present application employs the mineral cementitious material to cast the bed body, column, sliding saddle, ram, worktable, and support. Under heating conditions, the thermal conductivity of the mineral cementitious material is only 1/20 of that of gray cast iron. Consequently, within a unit time, a machine tool employing mineral cementitious material castings exhibits smaller temperature variation responses compared to those using gray cast iron components, thereby ensuring smaller deformation of the castings of the machine tool and ensuring the geometric accuracy of the machine tool. Meanwhile, during operation of the machine tool, moving components such as sliding saddle and ram are prone to vibration due to kinematic interactions, which causes synchronous vibrations in both the moving components and their connected components, thereby reducing repeat positioning accuracy and relative position accuracy of the moving components, consequently affecting machining precision. Notably, the mineral cementitious material demonstrates superior vibration damping properties, effectively attenuating vibration amplitudes of moving components and their connected components. This stabilizes the relative positional relationships between adjacent components, maintaining consistent fitting clearance between relatively moving components and ensuring the repeat positioning accuracy between these relatively moving components. By reducing the influence of heat sources on the machine tool temperature and reducing the vibration amplitude of various components of the machine tool, the technical solution reduces the deformation of machine tool components during operation. As a result, the machine tool can maintain stable geometric accuracy, positioning accuracy, and repeat positioning accuracy during long-term operation.

Further, a plurality of metal inserts is respectively pre-installed on the bed body, the column, the sliding saddle, the ram, the worktable, and the support, wherein the metal inserts provide interfaces for installing other workpieces. The plurality of metal inserts is evenly and symmetrically distributed.

By adopting the above technical solution, as castings of traditional bed body, column, sliding saddle, ram, worktable, and support are made of cast iron, allowing for post-casting operations such as drilling and welding on the castings to achieve connections between castings. However, the improved bed body, column, sliding saddle, ram, worktable, and support are cast using the mineral cementitious material, which, due to its inherent material properties, do not easily allow for post-casting operations such as drilling and welding on the castings, making it difficult to achieve connections between castings. By presetting metal inserts within the cementitious material during casting, the metal inserts are integrally formed with castings such as bed body, column, sliding saddle, ram, worktable, and support. The presence of the metal inserts provides interfaces for installation between adjacent castings and for installation of other workpieces onto the castings, thereby establishing an installation foundation for subsequent connection and fixation between castings. Due to the uniform and symmetrical distribution of the metal inserts, internal heat is easily conducted to the metal inserts, resulting in a symmetrical temperature distribution within the castings. This ensures that distributions of heat dissipation area, heat conduction paths, mass of components, etc. of the machine tool remain symmetrical, thereby generating a uniform temperature field across the castings of the machine tool. Consequently, the thermal radiation of the castings of the machine tool exhibits a linear and regular pattern, reducing the thermal deformation of the machine tool and ensuring the geometric accuracy, motion accuracy, positioning accuracy, and repeat positioning accuracy of the machine tool.

Further, the metal insert located in the bed body includes a footing insert, a bed body insert, and a bed body tubular insert, the footing insert forms a connecting portion on the bed body which has been cast, the connecting portion is used to install footings that support the bed body, the bed body insert is provided with an insert cavity, an inner wall of the insert cavity is provided with a threaded structure, and the bed body tubular insert forms an adhesive injection hole inside the bed body,
the metal insert located in the column includes a guide rail insert, a column insert, and a column tubular insert, the column insert is provided with an insert cavity, an inner wall of the insert cavity is provided with a threaded structure, and the column tubular insert forms a vent hole inside the column, and
the structural adhesive is injected through the adhesive injection channel into the joint surfaces between the column and the bed body, thereby bonding and securing the column and the bed body together using the structural adhesive.

By adopting the above technical solution, the bed body and the column are bonded using a structural adhesive. The structural adhesive compensates for the roughness defects on the joint surfaces between the bed body and the column, ensuring a 100% adhesion between the bed body and the column. Due to the excellent anti-aging properties of the structural adhesive, the structural adhesive forms a firm and cushioning wear-resistant layer at the joint surfaces between the bed body and column. Once cured, the structural adhesive exhibits superior physical properties such as shock resistance, compressive strength, tensile strength, and impact resistance. This prevents gaps from forming at the joint of the bed body and the column due to vibrations of moving components, ensuring the connection between the bed body and column. As a result, the relative positions of the bed body and column remain stably perpendicular over an extended period, thereby ensuring the positioning accuracy and geometric accuracy between the bed body and the column.

Further, the sliding saddle is provided with a ram connection groove and a pressure plate, a ram guide rail is positioned between the pressure plate and the ram connection groove, contact surfaces of the ram guide rail with the pressure plate and the ram connection groove are respectively provided with a wear-resistant layer, and the contact surface of the wear-resistant layer with the ram guide rail is machined into a precision surface.

By adopting the above technical solution, a precision surface is provided on the wear-resistant layer, which compensates for precision deviations and ensures geometric accuracy consistency between the ram connection groove, pressure plate, and the contact surface of the ram guide rail. Additionally, the arrangement of the wear-resistant layer reduces structural damage caused by friction, thereby extending the service life of the structure. This, in turn, reduces heat generation due to friction between structures, improving the repeat positioning accuracy between relative moving components.

Further, the worktable driving device, the sliding saddle driving device, and the ram driving device each include a lead screw assembly, and the worktable is fixedly provided with a Y-axis nut housing that cooperates with the lead screw assembly,
the sliding saddle is fixedly provided with an X-axis nut housing that cooperates with the lead screw assembly,
the ram is fixedly provided with a Z-axis nut housing that cooperates with the lead screw assembly,
a nut housing insert is respectively provided inside the sliding saddle, the ram, and the worktable for installing nut housings, and
a cooling jacket is respectively provided on an exterior of the X-axis nut housing, the Y-axis nut housing, and the Z-axis nut housing.

By adopting the above technical solution, during operation of the machine tool, the nut housing and the lead screw assembly are in coordinated engagement. Since the lead screw assembly generates a significant amount of heat during transmission, a cooling jacket is installed on the exterior of the nut housing to introduce a cooling liquid into the cooling jacket. The cooling liquid absorbs a large amount of heat, maintaining a stable temperature for both the nut housing and the lead screw assembly, thereby ensuring the fitting clearance of the lead screw assembly structure and maintaining the motion accuracy.

Further, a thermal insulation cotton is provided around each outer periphery of the bed body, the column, the sliding saddle, the ram, the worktable, and the support.

By adopting the above technical solution, the arrangement of the thermal insulation cotton delays the transfer of external heat to the castings of bed body, column, sliding saddle, ram, worktable, and support, ensuring that the temperature of each machine tool casting remains below a specified temperature and reducing the impact of external heat sources. Through the combination of the thermal insulation cotton and the mineral cementitious material, the introduction of external heat into the machine tool is reduced, isolating irregular heat fluctuations outside the machine tool.

Further, a cooling conduit is provided respectively inside the bed body, the column, the sliding saddle, the ram, and the worktable.

By adopting the above technical solution, the cooling liquid can be introduced into the cooling conduit, allowing the cooling liquid to absorb a significant amount of heat while maintaining a stable temperature. This enables constant temperature control of the bed body, column, sliding saddle, ram, and worktable, thereby reducing the impact of internal heat sources.

Further, at least two pre-stressed metal bar inserts are provided inside the ram, and the pre-stressed metal bar inserts are symmetrically embedded inside the ram in a length direction of the ram.

By adopting the above technical solution, the pre-stressed metal bar inserts are set inside the ram, which can counteract the tensile stress caused by the thermal expansion of the ram. This reduces the deformation of the ram. Meanwhile, the arrangement of the pre-stressed metal bar inserts enhances the rigidity strength of the ram, preventing damage to the ram and ensuring the geometric accuracy of the ram.

Further, the cooling conduit includes at least two cooling pipes, which are uniformly distributed on both sides of the pre-stressed metal bar inserts.

By adopting the above technical solution, since the pre-stressed metal bar inserts are embedded inside the ram, a part of the heat of the ram is conducted to the pre-stressed metal bar inserts. As the pre-stressed metal bar inserts are made of metal, the pre-stressed metal bar inserts are prone to deformation when heated. By arranging the cooling conduit on both sides of the pre-stressed metal bar inserts, the cooling conduit can cool the pre-stressed metal bar inserts, maintaining the temperature of the pre-stressed metal bar inserts to be equal to that of the ram, thereby reducing the deformation of both the pre-stressed metal bar inserts and the ram, and ensuring the geometric accuracy of the ram.

Further, an oil cooling conduit is provided inside the ram, the oil cooling conduit includes a first oil inlet pipe, a first oil return pipe, a second oil inlet pipe, and a second oil return pipe, the first oil inlet pipe and the first oil return pipe provide interfaces for the spindle motor which is provided with an oil cooling ring, the second oil inlet pipe and the second oil return pipe provide interfaces for bearings of the tool spindle which is provided with an oil cooling ring.

By adopting the above technical solution, since oil itself is non-magnetic and non-conductive, it does not affect the magnetic circuit of the motor. Therefore, oil is selected as the medium for internal direct cooling. Since the torque, rotational speed, and other parameters of the spindle motor are often limited by the rotor temperature rise limit of the motor, the combination of oil cooling and the oil cooling ring, which directly cools the heat source, enhances the heat dissipation efficiency of the spindle motor and significantly increases the power limit of the spindle motor. Compared with a water-cooling method, water cooling requires the heat inside the spindle motor (such as the windings inside the motor coil) to be transferred through multiple layers of materials to the stator housing of the spindle motor, and then carried away by the cooling liquid in the water channel of the stator housing. Due to the thermal resistance of materials, a temperature gradient exists from the spindle to the spindle motor housing. The spindle inside the spindle motor cannot be directly cooled, leading to heat accumulation and the formation of local hotspots, which reduces cooling efficiency. By adopting oil cooling, the heat source is directly cooled, enabling forced cooling of the spindle motor, thereby reducing the temperature rise of both the spindle motor and the bearings. This reduces the heat generated by the spindle motor and the bearings, and thus controls the thermal deformation of the machine tool, improving the machining precision of the machine tool.

The beneficial effects of the vertical machining center according to the present invention are as follows.

The present application employs the mineral cementitious material to cast the bed body, column, sliding saddle, ram, worktable, and support. Under heating conditions, the thermal conductivity of the mineral cementitious material is only 1/20 of the thermal conductivity of gray cast iron. Within a unit time, the machine tool castings made of the mineral cementitious material experience a smaller temperature rise when affected by external thermal radiation. This results in smaller deformation of the machine tool castings, thereby ensuring the shape accuracy of the machine tool. The castings of the bed body, column, sliding saddle, ram, worktable, and support are all made of the same material, which ensures that the thermal deformation of the relatively moving castings is the same, thus improving the geometric accuracy of the machine tool. During operation of the machine tool, moving components such as sliding saddle and ram are prone to vibration due to kinematic interactions, which causes synchronous vibrations in both the moving components and their connected components. This reduces the motion accuracy and the position accuracy of the moving components, thereby affecting the machining precision. The mineral cementitious material has excellent vibration damping properties, and can absorb the vibrations of the moving components and their connected components, reducing the amplitude of the vibrations. This ensures that the relative positions of the relatively moving components remain stable, and thus ensures that the fitting clearance between the relative moving components remains stable and guarantees the motion accuracy, positioning accuracy, and repeat positioning accuracy of the machine tool. The present application, by reducing the influence of heat sources on the machine tool temperature and reducing the vibrations of various components of the machine tool, reduces the thermal deformation of machine tool components during operation. As a result, the machine tool can maintain stable geometric accuracy, motion accuracy, positioning accuracy, and repeat positioning accuracy during long-term operation.

### Brief Description of Drawings

In order to illustrate the embodiments of the present invention or the technical solutions in the prior art more clearly, the following briefly introduces the accompanying drawings that need to be used in the description of the embodiments or the prior art. Obviously, the accompanying drawings in the following description are some embodiments of the present invention, and for a person skilled in the art, other drawings can also be obtained from these accompanying drawings without creative effort.
Fig. 1 is a schematic diagram of an overall structure of a vertical machining center according to the present invention.
Fig. 2 is an enlarged view of portion A of Fig. 1.
Fig. 3 is a schematic diagram of an overall structure of a bed body according to the present invention.
Fig. 4 is a structural schematic diagram showing a relationship between an internal metal insert and a cooling conduit in the bed body according to the present invention.
Fig. 5 is a schematic diagram of an overall structure of a cast stone worktable according to the present invention.
Fig. 6 is a structural schematic diagram showing a connection relationship among a worktable assembly insert, a Y-axis nut housing seat insert, and a worktable in the cast stone worktable according to the present invention.
Fig. 7 is a schematic diagram of an overall structure of a column according to the present invention.
Fig. 8 is a structural schematic diagram showing a relationship between an internal metal insert and a cooling conduit in the column according to the present invention.
Fig. 9 is a schematic diagram of an overall structure of a sliding saddle according to the present invention.
Fig. 10 is a structural schematic diagram showing a relationship between an internal metal insert and a cooling conduit in the sliding saddle according to the present invention.
Fig. 11 is a schematic diagram of an overall structure of an X-axis nut housing insert according to the present invention.
Fig. 12 is a schematic diagram of an overall structure of a ram according to the present invention.
Fig. 13 is a front view of the ram according to the present invention.
Fig. 14 is a B-B cross-sectional view of Fig. 13.
Fig. 15 is a top view of the ram according to the present invention.
Fig. 16 is a C-C cross-sectional view of Fig. 15.
Fig. 17 is a rear view of the ram according to the present invention, shown without a Z-axis nut seat installed.
Fig. 18 is a structural schematic diagram showing a relationship among a cooling jacket, an X-axis lead screw, an X-axis nut, and an X-axis nut housing insert according to the present invention.
Fig. 19 is a structural schematic diagram showing a relationship between the cooling conduit and a pipe joint insert according to the present invention.
Fig. 20 is a schematic diagram showing an applied force after assembly of the bed body and the column according to the present invention.
Fig. 21 is a schematic diagram of a point distribution on a front side of a machine tool according to the present invention.
Fig. 22 is a schematic diagram of a point distribution on a rear side of the machine tool according to the present invention.

In the drawings: 1. Bed body; 11. Y-axis guide rail; 12. Y-axis lead screw; 13. Y-axis servo motor; 14. Adhesive injection hole; 15. Y-axis nut; 16. Y-axis nut housing; 17. Y-axis nut housing seat; 2. Column; 21. Left gantry column; 22. Right gantry column; 23. Gantry crossbeam; 24. X-axis guide rail; 25. X-axis lead screw; 26. X-axis servo motor; 27. Vent hole; 28. X-axis nut; 3. Sliding saddle; 31. Z-axis guide rail; 32. Z-axis lead screw; 33. Z-axis servo motor; 34. Ram connection groove; 35. Pressure plate; 36. Z-axis nut; 4. Ram; 41. Z-axis nut housing; 42. Tool spindle; 43. Spindle motor; 44. Guide rail installation surface; 45. Z-axis nut housing seat; 5. Worktable; 6. Support; 71. First oil inlet pipe; 72. First oil return pipe; 73. Second oil inlet pipe; 74. Second oil return pipe; 8. Metal insert; 81. Motor steel sleeve insert; 811. Motor steel sleeve end face; 82. Spindle steel sleeve insert; 821. Spindle steel sleeve end face; 83. Z-axis nut housing seat insert; 831. Nut housing seat installation surface; 841. Footing insert; 842. Bed body assembly insert; 843. Bed body tubular insert; 8431. Flange insert; 8432. Y-axis guide rail insert; 851. Connection insert; 861. Worktable assembly insert; 862. Y-axis nut housing seat insert; 871. Guide rail insert; 8711. Column tubular insert; 881. Sliding saddle assembly insert; 8811. X-axis nut housing insert; 88111. Housing body; 88112. Connecting block; 8812. Ram fitting; 9. Cooling conduit; 91. Water inlet pipe; 92. Water return pipe; 10. Pre-stressed metal bar insert; 20. Wear-resistant layer; 30. Cooling jacket; 301. Inner sleeve; 3011. Annular groove; 302. Outer sleeve; 40. Pipe joint insert.

### Description of Embodiments

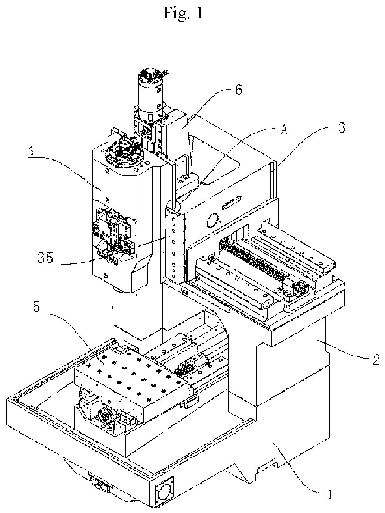

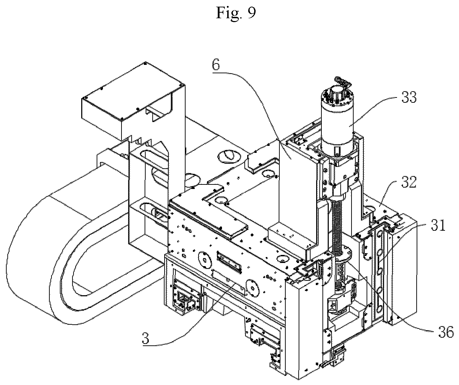

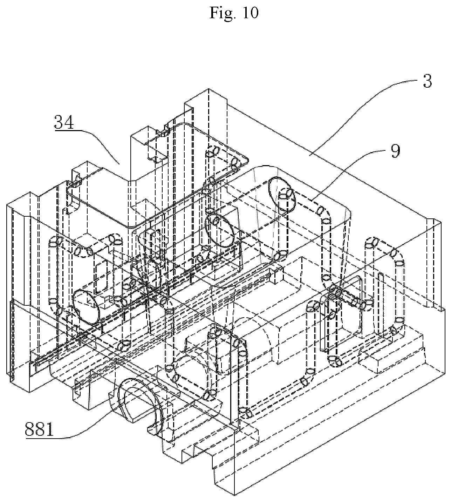

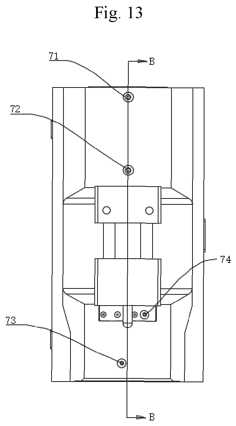

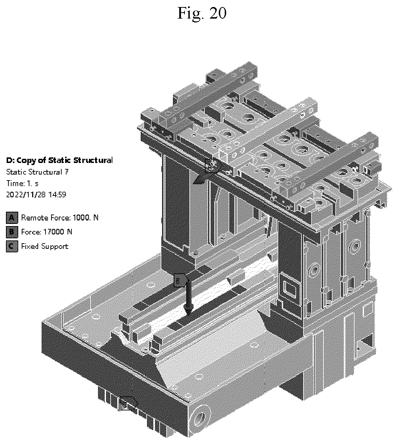

In order to make the purposes, technical solutions and advantages of the embodiments of the present invention clearer, the technical solutions in the embodiments of the present invention will be clearly and completely described below with reference to the accompanying drawings of Figs. 1 to 22 in the embodiments of the present invention. Obviously, the embodiments to be described are some, but not all, embodiments of the present invention. Based on the embodiments of the present invention, all other embodiments obtained by a person skilled in the art without creative efforts are within the protection scope of the present invention.

A Y-axis guide rail insert 8432, a worktable assembly insert 861, a guide rail insert 871, a sliding saddle assembly insert 881, and a Z-axis guide rail insert mentioned in the present application all have the same structure as a connection insert 851. Since these inserts are respectively arranged on different castings and provide installation interfaces for installing other components on the castings, in order to differentiate the uses of inserts on various castings, the inserts are named differently within the corresponding castings.

### Embodiment 1

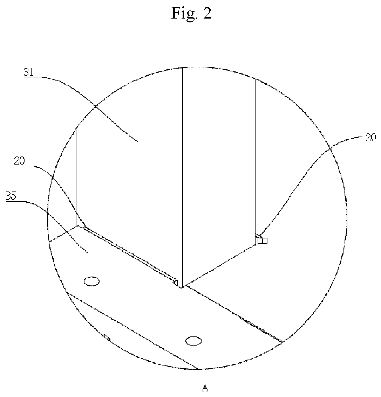

Referring to Fig. 1 and Fig. 2, a vertical machining center includes a bed body 1, a column 2, a sliding saddle 3, a ram 4, a worktable 5, and a support 6. The bed body 1, the column 2, the sliding saddle 3, the ram 4, the worktable 5, and the support 6 are all castings made of cast stone material. A temperature rise caused by external heat radiation is smaller in castings of a machine tool which are cast using a mineral cementitious material, resulting in less deformation of the castings of the machine tool and ensuring a shape accuracy of the machine tool. The bed body 1, the column 2, the sliding saddle 3, the ram 4, the worktable 5, and the support 6 are all made of the same material, which ensures that the thermal deformation of relative moving castings is the same, keeping the relative positions of relatively moving components stable and improving the positioning accuracy.

Referring to Fig. **1****,** Fig. 3, and Fig. 4, a cooling conduit 9 and a plurality of metal inserts 8 are set respectively inside the bed body **1,** the column 2, the sliding saddle 3, the ram 4, and the worktable 5. The cooling conduit 9 can provide constant temperature cooling control for the main body of the machine tool. The outer surfaces of the bed body 1, the column 2, the sliding saddle 3, the ram 4, and the worktable 5 are pasted with a foamed thermal insulation cotton to reduce the impact of external temperatures on the precision of the machine tool. The metal inserts 8 provide interfaces for the connection between different castings and the installation of assemblies on the castings. The metal inserts 8 are preferably high-strength steel inserts that compensate for the lack of strength of the cast stone material, ensuring the overall rigidity of the castings. Additionally, a plurality of steel inserts is symmetrically and evenly distributed within the corresponding castings, allowing the heat of the cast stone material to be conducted to the steel inserts, producing a uniform temperature field across the castings of the machine tool under the effect of the plurality of symmetrically distributed steel inserts. The temperature fields of the castings of the machine tool are similar, making the heat radiation of the castings of the machine tool linear and regular. By combining the metal inserts 8 with the cooling conduit 9, internal heat of the machine tool is quickly dissipated, while the external foamed thermal insulation cotton reduces the introduction of external heat into the machine tool, that is, isolates irregular heat fluctuations outside the machine tool and dissipates the internal heat of the machine tool, thereby reducing the impact of heat sources on the temperature of the machine tool. This reduces the thermal deformation of components during operation of the machine tool, ensuring that the machine tool maintains stable geometric accuracy, motion accuracy, positioning accuracy, and repeat positioning accuracy during long-term operation.

During the casting of the bed body **1,** the column 2, the sliding saddle 3, the ram 4, and the worktable 5, the cooling conduit 9 is respectively pre-embedded within the bed body 1, the column 2, the sliding saddle 3, the ram 4, and the worktable 5. The cooling conduit 9 is arranged in rows with intervals, and its shape adapts to the corresponding structures of the bed body 1, the column 2, the sliding saddle 3, the ram 4, and the worktable 5. The layout of the cooling conduit 9 avoids the structure of the metal inserts 8 inside the bed body 1, the column 2, the sliding saddle 3, the ram 4, and the worktable 5, ensuring the heat dissipation from the interior of the machine tool, maintaining a constant internal temperature of the machine tool, and reducing the impact of internal heat on both the machine tool and the metal inserts 8. As a result, the machine tool is less likely to deform due to internal heat, ensuring stable high precision during long-term operation.

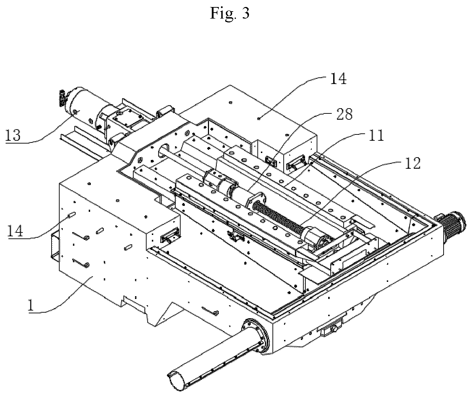

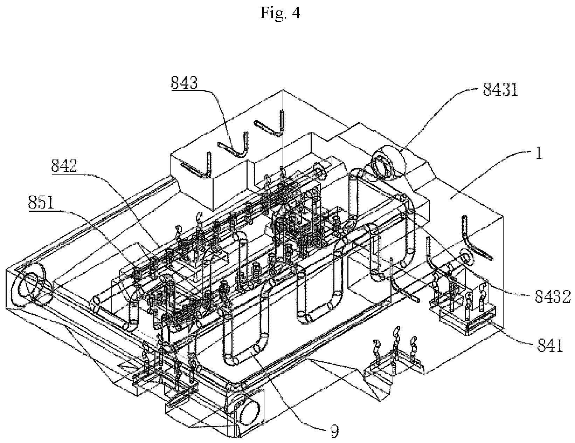

Referring to Fig. 3 and Fig. 4, the metal inserts 8 on the bed body 1 include a plurality of footing inserts 841, a plurality of bed body assembly inserts 842, and a plurality of bed body tubular inserts 843. The plurality of bed body assembly inserts 842 and the plurality of bed body tubular inserts 843 are symmetrically distributed on the bed body 1. The plurality of footing inserts 841 is symmetrically distributed on the lower end surface of the bed body 1. When the bed body 1 is heated, the heat of the bed body 1 is easily conducted to the metal inserts 8. Under the effect of a plurality of symmetrically arranged inserts, the temperature of the bed body 1 is symmetrically distributed, and the heat dissipation area, heat conduction paths, mass of the components, etc. of the bed body 1 are all symmetrically distributed, thus reducing the thermal deformation of the bed body 1.

The bed body assembly inserts 842 include a flange insert 8431, a Y-axis guide rail insert 8432, and a connection insert 851. The connection insert 851 has an insert cavity with a threaded structure on the inner wall. A fixing bolt can pass through the insert cavity with the threaded structure, facilitating the connection between the fixing bolt and the connection insert 851. The Y-axis guide rail insert 8432 can be configured as a multi-threaded steel insert, a T-shaped threaded steel structural insert, or a groove insert. Each of the multi-threaded steel insert, the T-shaped threaded steel structural insert, and the groove insert can increase the surface area of the installation portion and, when arranged in rows, can provide more stable connections between the installation portion and other components, thereby ensuring long-term stability with high precision. The present embodiment does not limit the Y-axis guide rail insert 8432. The footing inserts 841 can form connecting portions on the cast bed body, and the connecting portions are used to install the footings that can support the bed body 1. The arrangement of the footing inserts 841 enables the formation of footing connecting portions on the corresponding surfaces of the bed body 1 to connect and secure the structure of the bed body, improving the stability, durability, and performance of the bed body.

One end of the bed body tubular insert 843 is inserted from a side surface of the bed body 1 and then extends out from an upper end surface of the bed body 1. A pre-embedded tubular component forms a glue injection channel in the bed body 1 and forms a plurality of glue injection holes 14 respectively on the side surface of the bed body 1 and on an end surface of the bed body 1 facing the column 2. The glue injection holes 14 on the side surface of the bed body 1 are inlets, and the glue injection holes 14 on the upper end surface of the bed body 1 are outlets. The glue injection holes 14 connect the exterior of the bed body 1 and the contact surface between the bed body 1 and the column 2.

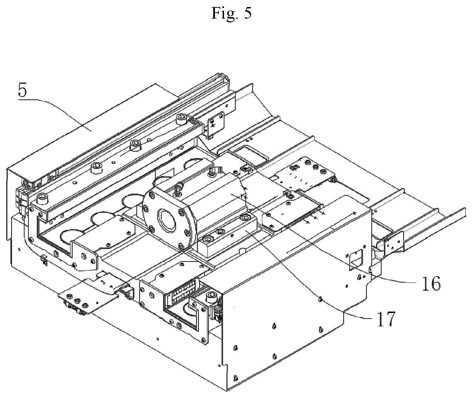

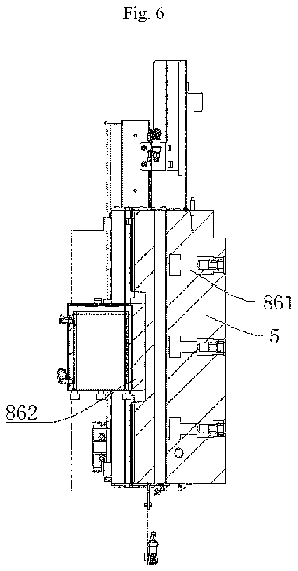

Referring to Fig. 5 and Fig. 6, the metal inserts 8 on the worktable 5 include a plurality of worktable assembly inserts 861 and Y-axis nut housing seat inserts 862, with the plurality of worktable assembly inserts 861 symmetrically distributed on the worktable 5. The worktable assembly insert 861 has the same structure as the connection insert 851 and will not be further elaborated here.

Referring to Fig. 3, Fig. 4, and Fig. 5, a worktable driving device is arranged on the bed body 1 to drive the worktable 5 to move in the Y-axis direction on the bed body 1. The worktable driving device includes a Y-axis guide rail 11, a Y-axis lead screw 12, and a Y-axis servo motor 13 that drives the Y-axis lead screw 12 to rotate. The Y-axis guide rail 11 is fixed on the bed body 1 through the Y-axis guide rail insert 8432, and the Y-axis lead screw 12 is fixed on the bed body 1 through the connection insert 851. The Y-axis servo motor 13 is fixed on the bed body 1 through the flange insert 8431. A Y-axis nut 15 is installed on the Y-axis lead screw 12, and the Y-axis nut 15 is externally sleeved with a Y-axis nut housing 16. The Y-axis nut housing 16 is fixed on the Y-axis nut housing seat 17, and the Y-axis nut housing seat 17 is fixed on the worktable 5 via the Y-axis nut housing seat insert 862. The Y-axis nut 15 engages in threaded transmission with the Y-axis lead screw 12, and the Y-axis servo motor 13 drives the worktable 5 to perform linear reciprocating motion in the Y-axis direction via the Y-axis lead screw 12.

The Y-axis nut housing seat insert 862 is machined to have a Y-axis nut housing seat installation surface. The Y-axis nut housing seat insert 862 is fixed on the worktable 5. The nut housing seat installation surface is finely machined to be used to install the Y-axis nut housing seat 17 and is parallel to the Y-axis guide rail installation surface, ensuring that after the overall assembly, the relative precision between the lead screw nut assembly and the guide rail of the machine tool is maintained.

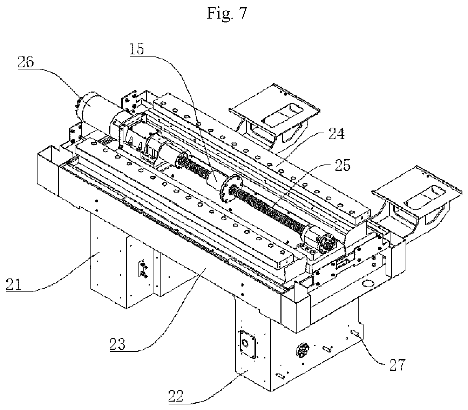

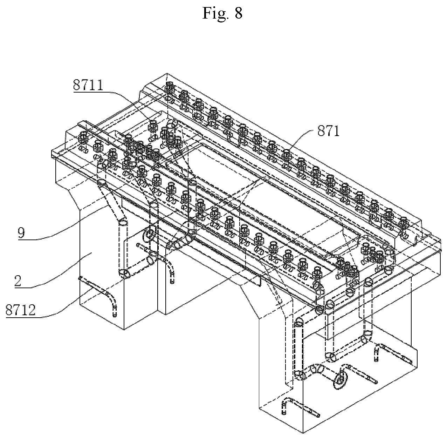

Referring to Fig. 7 and Fig. 8, the metal inserts 8 on the column 2 include the guide rail insert 871 and the column tubular insert 8711. The guide rail insert 871 has the same structure as the connection insert 851 and will not be further elaborated here.

The column 2 includes a left gantry column 21, a right gantry column 22, and a gantry crossbeam 23. The left gantry column 21 and the right gantry column 22 are symmetrically positioned, while the gantry crossbeam 23 is horizontally mounted above the left gantry column 21 and the right gantry column 22, forming a symmetrical gantry structure. A plurality of the guide rail inserts 871 is used, and some of the guide rail inserts 871 are divided into two groups and symmetrically distributed on both sides of the gantry crossbeam 23, providing interfaces for the installation of X-axis guide rails. Some of the guide rail inserts 871 are arranged at the ends of the gantry crossbeam 23, providing interfaces for the installation of the motor seat of the X-axis servo motor 26. Since the metal inserts 8 are made of metal, internal heat of the column 2 is easily conducted to the metal inserts 8. Under the influence of the metal inserts 8, the temperature of the column 2 is symmetrically distributed, leading to the symmetric distribution of the heat dissipation area, heat conduction paths, component mass, etc. of the column 2, which reduces thermal deformation of the column 2.

One end of the column tubular insert 8711 is inserted from a side surface of the column 2 and then extends out from a lower end surface of the column 2. A pre-embedded tubular component forms a vent channel in the column 2 and forms a plurality of vent holes 27 respectively on the side surface of the column 2 and on a lower end surface of the column 2. The vent holes 27 on the side surface of the column 2 are outlets, and the vent holes 27 on the lower end surface of the column 2 are inlets. The vent holes 27 connect the exterior of the column 2 and the joint surface between the bed body 1 and the column 2. Since the left gantry column 21 and the right gantry column 22 each have a plurality of vent holes 27, the contact area between the vent holes 27 and the joint surface is increased, facilitating the expulsion of air from the joint surface when injecting adhesive into the joint surface.

Referring to Figs. 1 and 7, during the assembly of the bed body and the column, the entire column 2 is hoisted onto the bed body 1. The structural adhesive is injected through the adhesive injection hole 14 into the joint surface between the column 2 and the bed body 1 until the structural adhesive overflows from the vent holes 27. The structural adhesive fully fills the joint surface between the column 2 and the bed body 1, compensating for roughness defects on the joint surface between the bed body and the column and ensuring 100% adhesion between the bed body 1 and the column 2. Finally, the column 2 is kept stationary until the structural adhesive is fully cured. After cured, the structural adhesive exhibits superior physical properties such as shock resistance, compressive strength, tensile strength, and impact resistance, and thus not only secures the column 2 to the bed body 1 but also enhances the connection rigidity between the bed body and the column.

Referring to Figs. 8, 9, and 10, the metal inserts 8 on the sliding saddle 3 include the sliding saddle assembly insert 881 and an X-axis nut housing insert 8811. The sliding saddle assembly insert 881 has the same structure as the connection insert 851 and will not be further elaborated here. The support 6 is fixed onto the sliding saddle 3 through the sliding saddle assembly insert 881.

The sliding saddle driving device is provided on the column 2 to drive the sliding saddle 3 to move in the X-axis direction. The sliding saddle driving device includes an X-axis guide rail 24, an X-axis lead screw 25, and an X-axis servo motor 26 that drives the X-axis lead screw 25 to rotate to enable the sliding saddle 3 to slide in the X-axis direction. The X-axis guide rail 24 is fixed to the column 2 through the guide rail insert 871, and the X-axis servo motor 26 is also fixed to the column 2 through the guide rail insert 871. The X-axis lead screw 25 is provided with an X-axis nut 28, which engages in threaded transmission with the X-axis lead screw 25. The X-axis nut 28 is externally sleeved with an X-axis nut housing, which is installed on the sliding saddle 3 through the X-axis nut housing insert 8811. The X-axis servo motor 26 drives the X-axis nut 28 to perform linear reciprocating sliding in the X-axis direction via the X-axis lead screw 25.

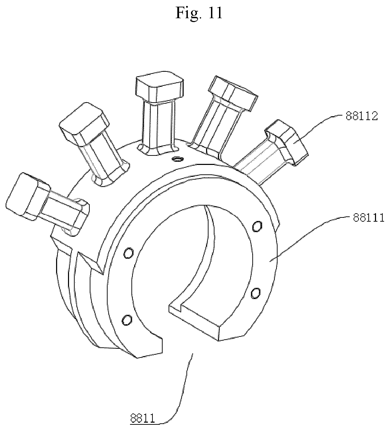

Referring to Figs. 7 and 11, the X-axis nut housing insert 8811 includes a housing body 88111, which is configured as an arc shape. The curvature of this arc matches the curvature of the outer circumferential surface of the X-axis nut 28. The outer circumferential surface of the housing body 88111 is provided with a plurality of connecting blocks 88112, which are evenly distributed on the outer circumferential surface of the housing body 88111. The connecting blocks 88112 extend outward in the radial direction of the housing body 88111, increasing the contact area between the housing body 88111 and the sliding saddle 3. Since vibrations are generated during the transmission of the Y-axis lead screw 12 and the Y-axis nut 15, by casting a plurality of connecting blocks 88112 into the worktable 5, the tightness and robustness of the connection between the Y-axis nut housing seat insert 862 and the sliding saddle 3 are enhanced. By matching the material of the X-axis nut housing insert 8811 with the material of the sliding saddle 3, the vibration frequencies of the X-axis nut housing insert 8811 and the connection components between the sliding saddle 3 and the X-axis nut housing insert 8811 are reduced. This stabilizes the relative positions of adjacent components, preventing fluctuations in the fitting clearance between relatively moving components. Consequently, the transmission stability of the X-axis lead screw 25 and the X-axis nut 28 is improved, ensuring high-precision and stable movement of the sliding saddle 3 in the X-axis direction.

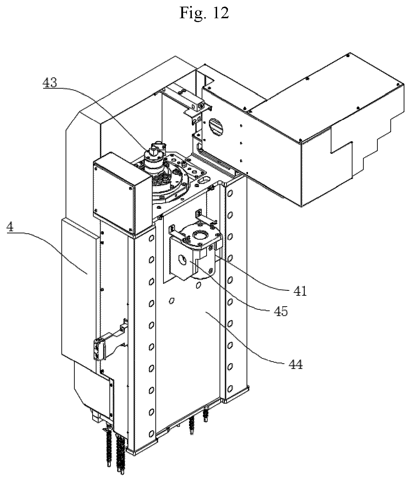

Referring to Figs. 12, 13, and 14, the metal insert 8 on the ram 4 include a ram fitting 8812, a Z-axis nut housing seat insert 83, and a pre-stressed metal bar insert 10. The ram fitting 8812 includes a Z-axis guide rail insert and a flange insert 8431. The Z-axis guide rail insert has the same structure as the connection insert 851 and will not be further elaborated here.

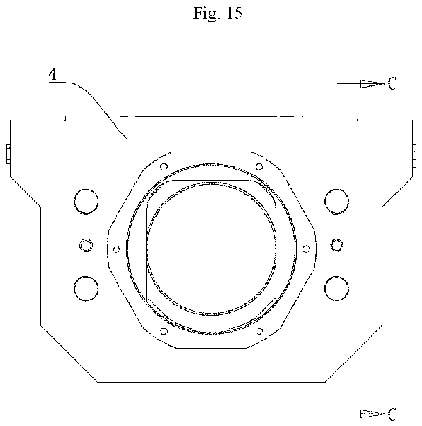

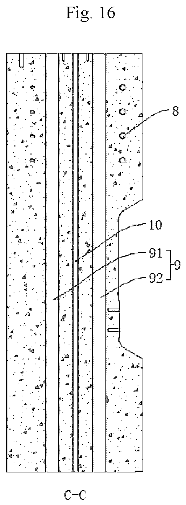

Referring to Figs. 15 and 16, there are two pre-stressed metal bar inserts 10 which are symmetrically embedded within the ram 4 in the length direction of the ram 4. The pre-stressed metal bar inserts 10 are preferably pre-stressed steel bar inserts. Pressure is applied in advance to the pre-stressed metal bar inserts 10 to counteract the tensile stress caused by thermal expansion of the ram 4, thereby further reducing the deformation of the ram 4 and enhancing the strength of the ram 4 to prevent the ram 4 from being damaged.

The cooling conduit 9 inside the ram 4 includes two cooling pipes. Two cooling pipes are one set, and the number of sets of cooling pipes is equal to the number of pre-stressed metal bar inserts 10. The two cooling pipes of each set include a water inlet pipe 91 and a water return pipe 92, and the water inlet pipes 91 of two sets of cooling pipes are arranged in parallel. The two cooling pipes are respectively fixed on both sides of the pre-stressed metal bar inserts 10, ensuring effective cooling and reducing the deformation of the pre-stressed metal bar inserts 10.

The ram 4 is provided with a through-hole extending in the length direction of the ram 4. The metal inserts 8 on the ram 4 also include a motor steel sleeve insert 81 for installing a spindle motor 43 and a spindle steel sleeve insert 82 for installing the spindle. The Z-axis nut housing seat insert 83 engages with a Z-axis lead screw 32.

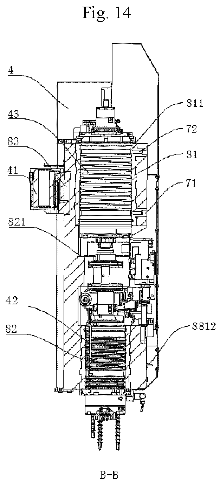

Referring to Fig. 14, the motor steel sleeve insert 81 and the spindle steel sleeve insert 82 are respectively fixed at both ends of the through-hole. The motor steel sleeve end face 811 of the motor steel sleeve insert 81 protrudes beyond the through-hole and serves as a fitting surface. The protrusion of the motor steel sleeve end face 811 beyond the through-hole ensures that the motor steel sleeve end face 811 can be independently finely machined, avoiding unnecessary waste during overall machining.

A spindle steel sleeve end face 821 of the spindle steel sleeve insert 82 is flush with the through-hole, and the plane of the spindle steel sleeve end face 821 serves as a fitting surface. The fitting surface is flush with the through-hole, enabling both components to be machined simultaneously and ensuring accuracy.

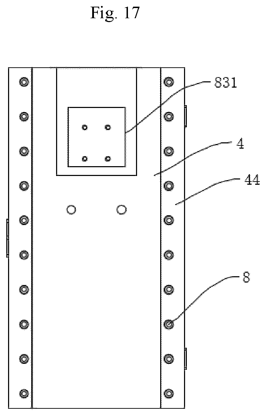

Referring to Figs. 14 and 17, the Z-axis nut housing seat insert 83 is machined to have a nut housing seat installation surface 831, and the Z-axis nut housing seat insert 83 is fixed to the ram 4. The nut housing seat installation surface 831 is parallel to the guide rail installation surface 44, and is located between two guide rail installation surfaces 44.

The nut housing seat installation surface 831 is finely machined to be used to install a lead screw nut housing seat and is parallel to the guide rail installation surface 44, ensuring that after the overall assembly, the relative precision between the lead screw nut assembly and the guide rail of the machine tool is maintained.

The ram 4 is internally provided with a tool spindle 42 and the spindle motor 43, which drives the tool spindle 42 to work. The tool spindle 42 is fixed inside the ram 4 via the spindle steel sleeve insert 82, and the spindle motor 43 is fixed inside the ram 4 via the motor steel sleeve insert 81. The aforementioned structure achieves rear placement of the motor. Since thermal load intensifies with proximity to the front end of the spindle, deformation of the ram is correspondingly amplified. By placing the spindle motor 43 at the rear, the heat of the spindle motor 43 is directed away from the ram and the electric spindle, allowing for better heat control on the ram 4 and suppression of heat generation in the spindle motor 43.

Referring to Fig. 14, the ram 4 is also internally provided with an oil cooling conduit, which includes a first oil inlet pipe 71 and a first oil return pipe 72 on the motor steel sleeve insert 81, as well as a second oil inlet pipe 73 and a second oil return pipe 74 on the spindle steel sleeve insert 82. The first oil inlet pipe 71 and the first oil return pipe 72 provide interfaces for a motor with an oil cooling ring, facilitating the cooling of the spindle motor 43. The second oil inlet pipe 73 and the second oil return pipe 74 provide interfaces for a spindle bearing with an oil cooling ring, facilitating the cooling of the electric spindle and reducing the impact of temperature-induced deformation on the precision of the spindle.

Referring to Figs. 1, 2, and 10, the ram 4 is installed on a side surface of the sliding saddle 3, which is correspondingly provided with a ram connection groove 34 and a pressure plate 35. The sliding saddle 3 is provided with a ram driving device capable of driving the ram 4 to slide in the Z-axis direction. The ram driving device includes the Z-axis lead screw 32 and a Z-axis servo motor 33, which drives the Z-axis lead screw 32 to rotate to enable the ram 4 to slide along the Z-axis. The Z-axis servo motor 33 is installed on the support 6. A Z-axis guide rail 31 is fixed to the sliding saddle 3 through the guide rail insert 871. The Z-axis lead screw 32 is provided with a Z-axis nut 36, which is externally sleeved with a Z-axis nut housing 41. The Z-axis nut housing 41 is fixed to a Z-axis nut housing seat 45, and the Z-axis nut housing seat is installed on the ram 4 via the Z-axis nut housing seat insert 83. The Z-axis nut 36 engages in threaded transmission with the Z-axis lead screw 32, and the Z-axis servo motor 33 drives the ram 4 to perform linear reciprocating sliding in the Z-axis direction via the Z-axis lead screw 32.

The Z-axis guide rail 31 is located between the pressure plate 35 and the ram connection groove 34, and the contact surfaces of the ram slide rail with the pressure plate 35 and the ram connection groove 34 are each provided with a wear-resistant layer 20. The installation of the wear-resistant layer 20 reduces structural damage caused by friction, increases the service life of the structure, and decreases the heat generated between structures due to friction.

The contact surface of the wear-resistant layer 20 with the Z-axis guide rail 31 is machined into a precision surface. The precision surface on the pressure plate 35 is a replicated surface of the precision surface of the ram connection groove 34, formed using a replication machining method. Before the replication, the contact surface is polished, leaving space for the filling of guide rail glue. A replication fixture has a precision surface that is machined by polishing. When the sliding saddle 3 and the precision surface of the replication fixture come into contact, the guide rail glue is evenly applied to the polished surface of the sliding saddle 3. At this point, the guide rail glue assumes the precision of the precision surface of the replication fixture. With the cooperation of the guide rail glue and the replication fixture, the precision of the precision surface of the replication fixture is replicated to the sliding saddle 3, ensuring the geometric accuracy of the sliding saddle 3.

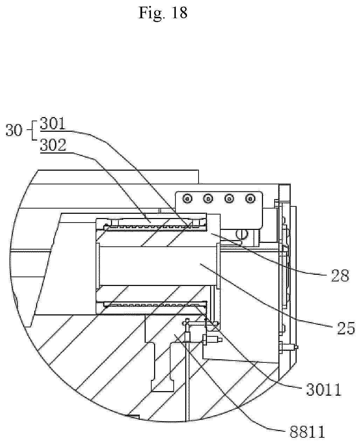

Referring to Fig. 18, the X-axis nut housing, the Y-axis nut housing, and the Z-axis nut housing 41 are each externally sleeved with a cooling sleeve 30. The cooling sleeve 30 includes an inner sleeve 301 and an outer sleeve 302, which are sleeved together, with the inner sleeve 301 and the outer sleeve 302 connected and fixed by bolts. The outer wall of the inner sleeve 301 has an annular groove 3011, and a cooling channel is formed between the annular groove 3011 and the inner surface of the outer sleeve 302 for the cooling liquid to flow through. The annular groove 3011 enables axial cooling of the nut housing, and the axial cooling can directly remove the heat generated in the transmission process of the nut and the lead screw. The heat is transmitted through the outer sleeve 302 to the cooling conduit 9 and finally dissipated by the cooling liquid inside the cooling conduit 9. This method greatly improves the heat dissipation of the nut, thereby controlling the temperature of the nut housing and the lead screw.

Embodiment 2: the only difference from Embodiment 1 is that the bed body 1, the column 2, the sliding saddle 3, the ram 4, the worktable 5, and the support 6 are all castings made of foamed cement material. The internal structure of each of the bed body 1, the column 2, the sliding saddle 3, the ram 4, the worktable 5, and the support 6 is also provided with reinforcement skeletons to enhance the strength of the castings. The reinforcement skeletons are steel bar frameworks made of steel bars, with shapes that match the shapes of the corresponding castings.

Before casting the bed 1, the column 2, the sliding saddle 3, the ram 4, and the worktable 5, the steel bars are pre-tied into a steel bar framework. The steel bar framework is then hoisted as a whole into the casting mold of the corresponding casting. The layout of the steel bars is designed to avoid interference with the metal inserts 8 and the cooling conduit 9 inside the bed body 1, the column 2, the sliding saddle 3, the ram 4, and the worktable 5. The steel bar framework and the casting material are integrally cast and molded.

Due to the strong compressive strength of the foamed cement and the strong tensile strength of the steel bars, embedding steel bars within the foamed cement allows the integrally cast and molded castings to possess both the compressive performance of foamed cement and the tensile performance of steel bars. The combined effect of these two materials further enhances the load-bearing capacity of the castings.

The porous structure of foamed cement provides excellent vibration absorption capability, reducing the impact of vibrations on the relative position accuracy and the geometric accuracy of the relatively moving castings of the machine tool.

Results of the performance comparison of cast iron, cast stone, and foamed cement materials are shown in Table 1.

**Table 1: Performance Analysis of Cast Iron, Cast Stone, and Foamed Cement**

| Material | Performance | Formability | Advantages and Disadvantages |
|---|---|---|---|
| Cast Stone | Density: 2.27-2.5 g/cm³ | Easy to form | Advantages: High precision (low deformation), excellent stability, excellent vibration damping Due to its thermal expansion coefficient being close to that of steel components, cast stone can be combined with steel components, enabling room-temperature casting with fewer casting defects. Disadvantages: The mechanical properties, such as tensile strength and compressive strength, are inferior to those of cast iron. |
| | Poisson's Ratio = 0.2 | | |
| | Elastic Modulus: 40 Gpa | | |
| | Compressive Strength: 131.81-189.8 Mpa | | |
| | Flexural Strength: 15-22.86 Mpa | | |
| | Thermal Expansion Coefficient: 12.4e⁻⁶/°C | | |
| | Thermal Conductivity: 2.7 w/(m.k) | | |
| Gray Cast Iron HT150 | Density: 7 g/cm³ | Easy to form | Advantages: Easy to machine, low cost, thermal expansion coefficient close to most measured steel components, long service life, and well-established manufacturing process. Disadvantages: Prone to deformation, weak vibration damping, susceptible to corrosion, low strength, and complex molding process. Castings are prone to defects such as porosity and sand holes. |
| | Poisson's Ratio = 0.25 | | |
| | Elastic Modulus: 116 Gpa | | |
| | Thermal Expansion Coefficient: 11.1e⁻⁶/°C | | |
| | HBS: 110-200 | | |
| | Thermal Conductivity: 45 w/(m.k) | | |
| Foamed Cement | Dry Bulk Density: 400 ± 50 kg/m³ | Easy to form | Advantages: Low elastic modulus due to its lightweight and porous structure, thermal expansion coefficient being close to that of steel components, and strong durability. |
| | Thermal Conductivity: ≤ 0.069 w/(m.k) | | |
| | Compressive Strength: ≥ 0.1 Mpa | | |
| | Flexural Strength: ≥ 0.1 Mpa | | Disadvantages: Much lower compressive strength than cast stone, only 1/1000 of cast stone. |

According to Table 1, compared to traditional cast iron materials, the cast stone material has a thermal conductivity which is only 1/20th of the thermal conductivity of cast iron, and thus is less sensitive to short-term environmental temperature changes. Therefore, when the castings of the bed body, the column, the sliding saddle, the ram, the worktable, and the support according to the present application are made of mineral cast stone materials, under the same heat input per unit time, the thermal deformation of the machine tool using castings made of the mineral cast stone material is smaller than the thermal deformation of the machine tool using gray cast iron components. Smaller casting deformation of the machine tool ensures the geometric accuracy of the castings of the machine tool.

The mineral cast stone material also exhibits excellent vibration damping properties, with a damping characteristic value being 6 to 10 times that of cast iron. Castings of the bed body, the column, the sliding saddle, the ram, the worktable, and the support are all made of mineral cast stone material with excellent vibration damping properties, thereby reducing the vibration amplitude of the moving components and their connected components. This ensures that the relative positions of adjacent components remain stable, and thus ensures that the fitting clearance between the relative moving components is less likely to vary. By reducing the deformation of machine tool castings and the fitting clearance between relatively moving components, the machine tool maintains stable geometric accuracy, positioning accuracy, and repeat positioning accuracy during long-term operation.

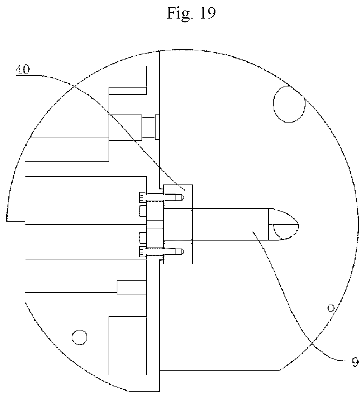

Embodiment 3: the only difference from Embodiment 1 is that, with reference to Fig. 1 and Fig. 19, pipe joints are installed respectively at both ends of the cooling conduit 9 in the bed body 1, the column 2, the sliding saddle 3, the ram 4, and the worktable 5, the specifications of the pipe joints are designed to match the ends of the cooling conduit, enabling connection of the cooling conduit between adjacent castings, and the selection of the pipe joints which connect the cooling conduit depends on actual requirements and is not specifically limited here.

The bed body 1, the column 2, the sliding saddle 3, the ram 4, and the worktable 5 are each pre-equipped with a pipe joint insert 40. The pipe joint insert 40 has a cavity that matches the cooling conduit. The pipe joint is fixed onto the corresponding casting via a pipe joint insert. Before the casting and molding, the end of the cooling conduit is inserted into the cavity, which has an inner wall with a threaded section. A template is arranged externally on the casting, and the template has a through hole aligned with the center of the cavity. A bolt passes through the through hole and is threadably connected to the threaded section of the cavity, securing the position of the end of the cooling conduit under the constraint of the template. The template also prevents casting material from entering the cooling conduit. After casting and molding, the template is removed, and the pipe joint is connected to the pipe joint insert 40 using bolts. The cooling conduits of adjacent castings are interconnected via the pipe joints, thereby establishing the continuous cooling conduit.

### Performance Testing:

The connection rigidity of the bed body and the column of the machine tool of Embodiment 1 and the connection rigidity of the bed body and the column of the machine tool made of cast iron material are tested. The test results are shown in Tables 2 and 3.

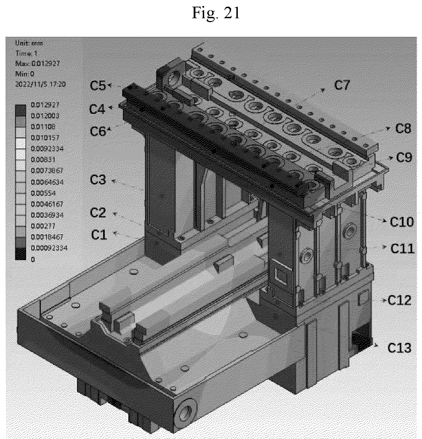

Testing Method: referring to Fig. 21, after the assembly of the bed body and the column is completed, the bed body is fixed, and a motor-driven lead screw applies a force of 1000 N to different point positions of the machine tool. A load of 17000 N is simulated on the bed body, and the deformation is measured using a German MAHR digital indicator.

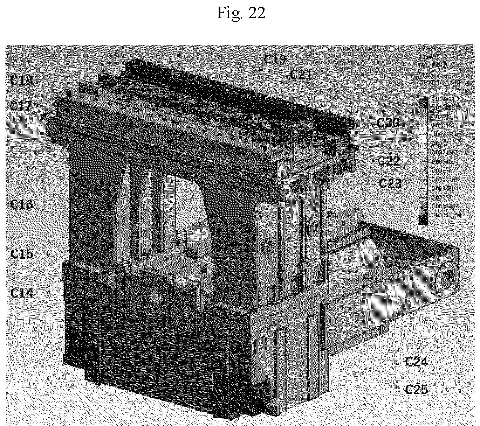

The test point positions are distributed as shown in Figs. 21 and 22, with Fig. 21 showing the point position distribution on the front of the machine tool and Fig. 22 showing the point position distribution on the rear of the machine tool.

**Table 2: Testing Data of Deformation under Load for Bed Body and Column Made of Cast Stone Material**

| Point Position | C1 | C2 | C3 | C4 | C5 | C6 | C7 | C8 | C9 |
|---|---|---|---|---|---|---|---|---|---|
| Deformation (mm) | 0.0034 | 0.0035 | 0.0041 | 0.0057 | 0.0060 | 0.0061 | 0.0057 | 0.0060 | 0.0060 |

| Point Position | C10 | C11 | C12 | C13 | C14 | C15 | C16 | C17 | C18 |
|---|---|---|---|---|---|---|---|---|---|
| Deformation (mm) | 0.0057 | 0.0042 | 0.0036 | 0.0034 | 0.0016 | 0.0019 | 0.0030 | 0.0050 | 0.0053 |

| Point Position | C19 | C20 | C21 | C22 | C23 | C24 | C25 | | |
|---|---|---|---|---|---|---|---|---|---|
| Deformation (mm) | 0.0053 | 0.0053 | 0.0049 | 0.0049 | 0.0033 | 0.0019 | 0.0017 | | |

**Table 3: Testing Data of Deformation under Load for Bed Body and Column Made of Cast Iron Material**

| Point Position | C1 | C2 | C3 | C4 | C5 | C6 | C7 | C8 | C9 |
|---|---|---|---|---|---|---|---|---|---|
| Deformation (mm) | 0.0062 | 0.0066 | 0.0083 | 0.0118 | 0.0128 | 0.0127 | 0.0117 | 0.0127 | 0.0128 |

| Point Position | C10 | C11 | C12 | C13 | C14 | C15 | C16 | C17 | C18 |
|---|---|---|---|---|---|---|---|---|---|
| Deformation (mm) | 0.0118 | 0.0089 | 0.0066 | 0.0061 | 0.0030 | 0.0035 | 0.0063 | 0.0104 | 0.0115 |

| Point Position | C19 | C20 | C21 | C22 | C23 | C24 | C25 | | |
|---|---|---|---|---|---|---|---|---|---|
| Deformation (mm) | 0.0115 | 0.0115 | 0.0105 | 0.0105 | 0.0066 | 0.0035 | 0.0029 | | |

By comparing Tables 2 and 3, it can be observed that, under the same temperature, at the same test points, by the same applied force, and in the same duration, the deformation of the castings made of cast stone material is smaller than the deformation of the castings made of cast iron material. That is, the castings made of cast stone material have higher rigidity than the castings made of cast iron material. Thus, the geometric accuracy of the castings is ensured.

In the present application, the bed body, column, sliding saddle, ram, worktable, and support castings are all made of mineral cast stone material. According to the present application, by embedding metal inserts inside the cast stone material and leveraging the combination of the metal inserts and the cast stone material, the castings exhibit comparable thermal deformation across different point positions and achieve uniform thermal distribution throughout the structure. This configuration ensures that thermal deformation levels remain consistent across all machine tool castings, thereby ensuring the geometric accuracy of the machine tool.

**In** the present application, the bed body, column, sliding saddle, ram, worktable, and support castings are all made of mineral cast stone material. According to the present application, by embedding metal inserts inside the cast stone material and leveraging the combination of the metal inserts and the cast stone material, the rigidity of the formed machine tool castings is enhanced. This compensates for the relatively lower tensile strength and compressive strength of the cast stone material, extending the service life of the machine tool castings. Additionally, this improves the load-bearing capacity of the machine tool castings, making the machine tool castings less prone to deformation under external forces, thereby ensuring the geometric accuracy and the positioning accuracy of the machine tool castings.

Finally, it should be noted that: the above embodiments are only used to illustrate the technical solutions of the present invention, but not to limit them; although the present invention has been described in detail with reference to the foregoing embodiments, a person skilled in the art should understand that: the technical solutions described in the foregoing embodiments can still be modified, or some or all of the technical features thereof can be equivalently substituted. However, these modifications or substitutions do not make the essence of the corresponding technical solutions deviate from the scope of the technical solutions of the embodiments of the present invention.

## Claims

1. A vertical machining center comprising:
a bed body (1),
a column (2),
a sliding saddle (3),
a ram (4),
a worktable (5), and
a support (6), wherein
the bed body (1), the column (2), the sliding saddle (3), the ram (4), the worktable (5), and the support (6) are all cast using a mineral cementitious material,
a worktable driving device is provided on the bed body (1) to drive the worktable (5) to move in a Y-axis direction on the bed body (1),
the column (2) is fixed on the bed body (1) and adopts a symmetrical gantry structure, including a left gantry column (21), a right gantry column (22), and a gantry crossbeam (23), and a sliding saddle driving device is provided on the gantry crossbeam (23) to drive the sliding saddle (3) to move in an X-axis direction,
a ram driving device is provided on the sliding saddle (3) to drive the ram (4) to slide in a Z-axis direction, and
the ram (4) is internally provided with a tool spindle (42) and a spindle motor (43) configured to drive the tool spindle (42) to operate.

2. The vertical machining center according to claim 1, wherein
a metal insert (8) is respectively pre-installed inside the bed body (1), the column (2), the sliding saddle (3), the ram (4), the worktable (5), and the support (6), wherein the metal insert (8) provides interfaces for installing other workpieces.

3. The vertical machining center according to claim 2, wherein
the metal insert (8) located in the bed body (1) includes a footing insert (841), a bed body assembly insert (842), and a bed body tubular insert (843), the footing insert (841) forms a connecting portion on the bed body which has been cast, the connecting portion is used to install footings that support the bed body (1), the bed body assembly insert (842) is provided with an insert cavity, an inner wall of the insert cavity is provided with a threaded structure, and the bed body tubular insert (843) forms an adhesive injection hole (14) inside the bed body,
the metal insert (8) located in the column (2) includes a guide rail insert (871), a column assembly insert (8711), and a column tubular insert (8712), the column assembly insert (8711) is provided with an insert cavity, an inner wall of the insert cavity is provided with a threaded structure, and the column tubular insert (8712) forms a vent hole (27) inside the column, and
a structural adhesive is injected into the joint surfaces between the column (2) and the bed body (1) through the adhesive injection hole (14), such that the column (2) and the bed body (1) are bonded and fixed together using the structural adhesive.

4. The vertical machining center according to claim 1, wherein
the sliding saddle (3) is provided with a ram connection groove (34) and a pressure plate (35), a ram guide rail is positioned between the pressure plate (35) and the ram connection groove (34), contact surfaces of the ram guide rail with the pressure plate (35) and the ram connection groove (34) are respectively provided with a wear-resistant layer (20), and the contact surface of the wear-resistant layer (20) with the ram guide rail is machined into a precision surface.

5. The vertical machining center according to claim 1, wherein the worktable driving device, the sliding saddle driving device, and the ram driving device each include a lead screw assembly, and the worktable (5) is fixedly provided with a Y-axis nut housing (16) that cooperates with the lead screw assembly,
the sliding saddle (3) is fixedly provided with an X-axis nut housing that cooperates with the lead screw assembly,
the ram (4) is fixedly provided with a Z-axis nut housing that cooperates with the lead screw assembly,
a cooling jacket (30) is respectively provided on an exterior of the X-axis nut housing, the Y-axis nut housing, and the Z-axis nut housing, and
a nut housing insert is respectively provided inside the sliding saddle (3), the ram (4), and the worktable (5) for installing nut housings.

6. The vertical machining center according to claim 1, wherein
a thermal insulation cotton is provided around each outer periphery of the bed body (1), the column (2), the sliding saddle (3), the ram (4), the worktable (5), and the support (6).

7. The vertical machining center according to claim 1, wherein
a cooling conduit (9) is provided respectively inside the bed body (1), the column (2), the sliding saddle (3), the ram (4), and the worktable (5).

8. The vertical machining center according to claim 7, wherein
at least two pre-stressed metal bar inserts (10) are provided inside the ram (4), and the pre-stressed metal bar inserts (10) are symmetrically embedded inside the ram (4) in a length direction of the ram (4).

9. The vertical machining center according to claim 8, wherein
the cooling conduit (9) includes at least two cooling pipes, which are uniformly distributed on both sides of the pre-stressed metal bar inserts (10).

10. The vertical machining center according to claim 1, wherein
an oil cooling conduit is provided inside the ram (4), the oil cooling conduit includes a first oil inlet pipe (71), a first oil return pipe (72), a second oil inlet pipe (73), and a second oil return pipe (74), the first oil inlet pipe (71) and the first oil return pipe (72) provide interfaces for the spindle motor (43) which is provided with an oil cooling ring, the second oil inlet pipe (73) and the second oil return pipe (74) provide interfaces for bearings of the tool spindle (42) which is provided with an oil cooling ring.
